# EUROPEAN PATENT APPLICATION

(11) **EP 3 381 804 A1**
(43) Date of publication of application: **03.10.2018**
(21) Application number: 18164528.4
(22) Date of filing: 28.03.2018
(51) Int. Cl.: B64D 11/06

(54) **CONNECTOR**

(30) Priority: 31.03.2017 GB 201705185
(71) Applicant: Acro Aircraft Seating Limited, Crawley, West Sussex RH11 0PR (GB)
(72) Inventor: HODGKINSON, Alex, Crawley, West Sussex RH11 0PR (GB)
(74) Representative: Sweetinburgh, Mark Roger

(57) **Abstract**

Described herein is a connector for attaching a seat base cushion of an aircraft seat to an elongate frame member of an aircraft seat and for maintaining a gap between the seat base cushion and the elongate frame member. The connector comprises (i) a body positionable between the seat base cushion and the elongate frame member, (ii) first and second frame fasteners for attaching the body to the elongate frame member; and (iii) a seat base cushion attachment means for removably attaching the body to the underside of the seat base cushion. The first frame fastener is provided on a frame facing surface of the body such that it is positionable between the body and the elongate frame member. The second frame fastener is for at least partially surrounding the elongate frame member. Also described is a seat frame, seat base cushion, seat and row of seats.

## Description

The present invention relates to connectors for securing aircraft seat components to seat frames, in particular to connectors for securing aircraft seat base cushions to seat frames.

When providing aircraft passenger seats, it is usual for various components of the seat to be removable for ease of replacement or repair. One example is in relation to seat base cushions.

Whilst various methods of connecting seat base cushions to the frame of an aircraft seat are known, they generally suffer from various drawbacks.

In one example, a seat base is provided with a rigid lower panel, which includes C-shaped clips for clipping the seat base over an elongate frame member of the seat frame. The seat base cushion is then attached to the upper surface of the rigid lower panel. However, such an arrangement is cumbersome, and the rigid lower panel not only adds unnecessary weight but can also easily become detached from the frame and/or the seat cushion from the rigid panel. This can cause problems during removal of seat cushions for repair or replacement, but can also provide a hazard in a crash situation where the rigid lower panel, if detached from the cushion and the frame, can result in injury to passengers.

Whilst one solution is to attach seat base cushions directly to the frame, for example by the use of Velcro (RTM), the cushion is then prone to damage due to its close proximity to the frame and other components of the seat.

It is, therefore, an object of the present invention to provide an improved method of connecting a seat base to the frame of an aircraft seat.

### SUMMARY OF THE INVENTION

According to one aspect of the present invention, there is provided a connector for attaching a seat base cushion of an aircraft seat to an elongate frame member of an aircraft seat and for maintaining a gap between the seat base cushion and the elongate frame member, wherein the connector comprises
(i) a body positionable between the seat base cushion and the elongate frame member,
(ii) first and second frame fasteners for attaching the body to the elongate frame member; and
(iii) a seat base cushion attachment means for removably attaching the body to the underside of the seat base cushion,
wherein the first frame fastener is provided on a frame facing surface of the body such that it is positionable between the body and the elongate frame member and wherein the second frame fastener is for at least partially surrounding the elongate frame member.

Preferably, the second frame fastener is provided around the body. As such, when connected to the elongate frame member, the second frame fastener at least partially surrounds both the body and the elongate frame member.

Remarkably, the present invention provides a connector which can be used to removably attach a seat base cushion to the frame of an aircraft seat, whilst at the same time providing a gap between the seat base cushion and the frame but which is, itself, securely attached to the frame by first and second fasteners. This means that, whilst the seat base cushion can easily be removed, the connector remains attached to the frame. This is advantageous because it reduces the risk of debris flying around an aircraft cabin in the event of a crash, but also reduces the unwanted detachment of the connector, for example the body, during replacement of a seat base cushion. This greatly reduces maintenance times because the connector does not need to be re-attached to the frame, as would be the case with known connectors, in the event of accidental displacement therefrom. In addition, the provision of a first fastener between the body and the frame provides a secure attachment of the body to the frame, whilst the provision of a second fastener which surrounds both the frame and the body not only provides a second, back-up method of attachment of the body to the frame, but also provides the option for permanent attachment of a seat base cushion to the body, and thus the frame. In this respect, if the seat base cushion is provided with one or more receiving elements for receiving the second fastener, the seat base cushion can be permanently attached to the body. For example, as discussed below, in one example, the one or more receiving elements can comprise one or more loops provided on the underside of a seat base cushion through which the second fastener can pass.

The ability to convert a removable seat cushion to a permanently connected seat cushion can, for example, be particularly advantageous for aisle seats or seats next to an emergency exit. The connector of the present invention provides this option without any additional components. This means it is very easy to convert a detachable seat cushion into a permanently attached seat cushion.

Preferably, the first frame fastener comprises an adhesive for permanently attaching the body to the frame.

Preferably, the first frame fastener comprises an adhesive pad for permanently attaching the body to the frame.

Preferably, the second frame fastener comprises a flexible loop.

Preferably, the flexible loop is adjustable during installation from a large loop to a smaller loop for securing the body against the frame and tightening there against.

Preferably, the flexible loop comprises a lock for preventing the loop from being relaxed once tightened against the frame and the body.

Preferably, the second frame fastener comprises a cable tie.

The provision of a cable tie is particularly advantageous because it allows the easy conversion of a removably attached seat base cushion to a permanently attached seat base cushion. This is particularly the case in embodiments in which a seat base cushion is provided with one or more receiving elements, for example loops, provided on the underside of the seat base cushion.

Preferably, the body comprises a groove for accommodating the second fastener on its outer surface. This is advantageous because it prevents the second fastener from interfering with the seat base cushion connector in embodiments in which the second fastener is not connected to the seat base cushion.

Preferably, the body comprises one or more holding means for holding the second fastener into engagement with the body. Preferably, the one or more holding means comprise one or more apertures through which the second fastener passes.

Preferably, the one or more holding means are provided at one or both ends of the groove.

Preferably, the seat base cushion attachment means is a seat base cushion coupling.

Preferably, the seat base cushion attachment means comprises Velcro.

Preferably, the seat base cushion attachment means comprises a pair of Velcro strips.

Preferably, the seat base cushion attachment means comprises a pair of Velcro strips positioned either side of the groove.

Preferably, the body is a rigid body.

Preferably, the body is substantially C-shaped.

Preferably, the body is shaped to abut against and at least partially surround a frame member of the aircraft seat frame.

According to another aspect of the present invention, there is provided a seat frame, preferably a vehicle seat frame, preferably an aircraft seat frame, comprising one or more connectors as described herein.

According to another aspect of the present invention, there is provided a seat base cushion comprising one or more receiving elements for receiving a second frame fastener of a connector as described herein.

Preferably, the one or more receiving elements comprise one or more loops.

Preferably, the one or more loops are provided on the underside of the seat base cushion.

Preferably, the seat base cushion comprises a length or strip of material attached to the underside of the seat base cushion and comprising the one or more loops.

Preferably, the material comprises leather or nylon.

Preferably, the one or more loops are formed by gaps between attachment points of the material on the underside of the seat cushion.

Preferably, the material is stitched to the underside of the seat base cushion and the one or more loops are formed by gaps in the stitching.

Preferably, the seat base cushion comprises a foam material.

Preferably, the seat base cushion comprises one or more recesses for accommodating one or more connectors as described herein.

Preferably, the one or more recesses comprise one or more channels.

Preferably, the seat base cushion comprises first and second recesses for accommodating one or more connectors as described herein.

Preferably, the first recess is for accommodating a first set of one or more connectors and the second recess is for accommodating a second set of one or more connectors, wherein the first set of connectors are positioned on a first elongate frame member and the second set of connectors are positioned on a second elongate frame member.

Preferably, the first recess is for accommodating a first pair of connectors and the second recess is for accommodating a second pair of connectors, wherein the first pair of connectors are positioned on a first elongate frame member and the second pair of connectors are positioned on a second elongate frame member.

Preferably, the first recess is positioned forward of the second recess.

According to another aspect of the present invention, there is provided a seat, preferably a vehicle seat, preferably an aircraft seat, comprising one or more connectors and/or a seat base cushion as described herein.

According to another aspect of the present invention, there is provided a row of seats as described herein.

It will be appreciated that reference to "one or more" includes reference to "a plurality".

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

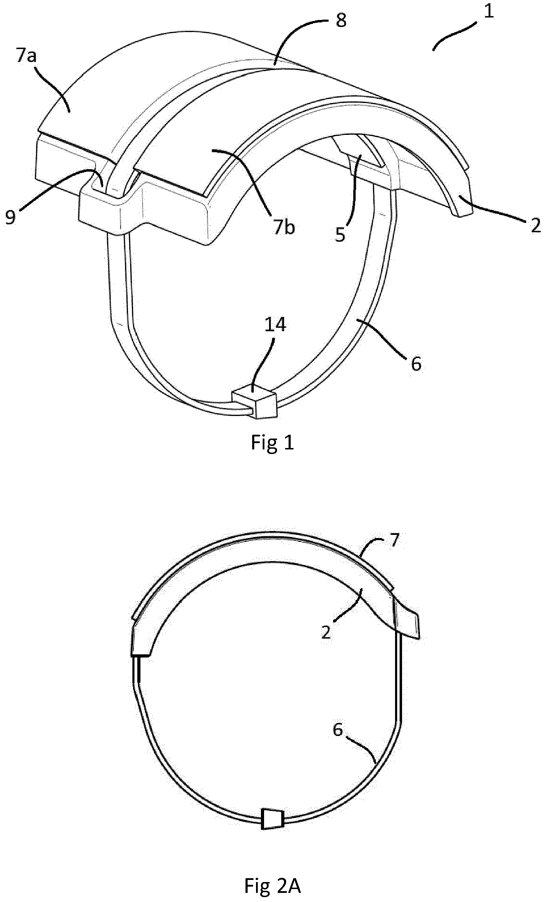

Example embodiments of the present invention will now be described with reference to the accompanying Figures, in which:-
Figure 1 shows a first view of a connector as described herein;

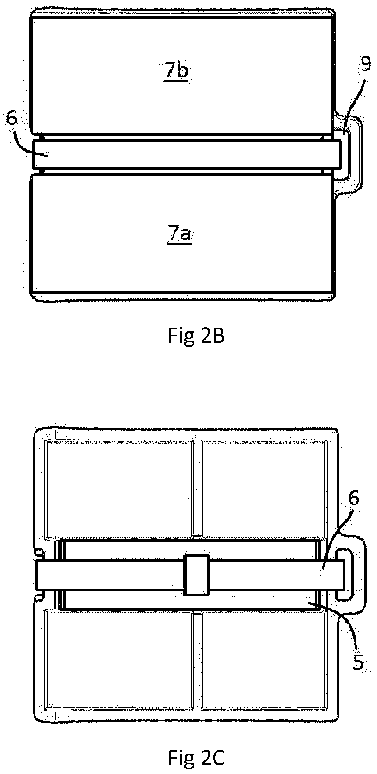

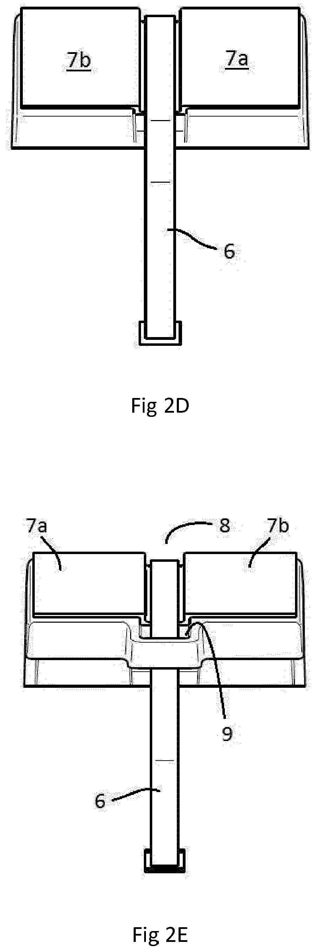

Figures 2A to 2E show additional views of the connector shown in Figure 1;
Figure 3 shows a seat base cushion as described herein; and
Figures 4A to 4C show connectors as described herein attached to an elongate frame member of an aircraft seat and Figures 4D and 4E show connectors as described herein attached to seat base cushion.

The present invention relates to connectors for attaching a seat base cushion to the frame of a seat, preferably a vehicle seat, most preferably an aircraft seat.

With reference to the Figures, a connector 1 comprises a C-shaped, arcuate body 2 positionable between a seat base cushion 3 of an aircraft seat 15 and an elongate frame member 4 of an aircraft seat or row of seats 15. The connector 1 comprises first 5 and second 6 frame fasteners for attaching the body 1 to an elongate frame member 4, and a seat base cushion attachment means/coupling 7 for removably attaching the body 2 to the underside of the seat base cushion 3.

In the examples shown, the first frame fastener 5 is a strip of double-sided, pressure-activated tape, which secures the body 2 to the elongate frame member 4. The second frame fastener 6 is a cable tie, which is positioned within a groove 8 on the base cushion facing surface of the body 2 and passes through an aperture 9 at one end of the groove 8.

The seat base cushion attachment means/coupling 7 comprises a pair of Velcro patches 7a, 7b positioned either side of the groove 8.

In order to attach the body 2 to the frame 4 of an aircraft seat, the body is first positioned against the elongate frame member 4 and pressed into contact therewith. This attaches the body 2 to the frame via the first frame fastener (adhesive strip) 5. The second frame fastener 6 (cable tie) is then placed around the elongate frame member 4 and tightened. As is conventional with cable ties, a lock 14 prevents the cable tie from being loosened. This provides a second, secure attachment of the body 2 to the elongate frame member.

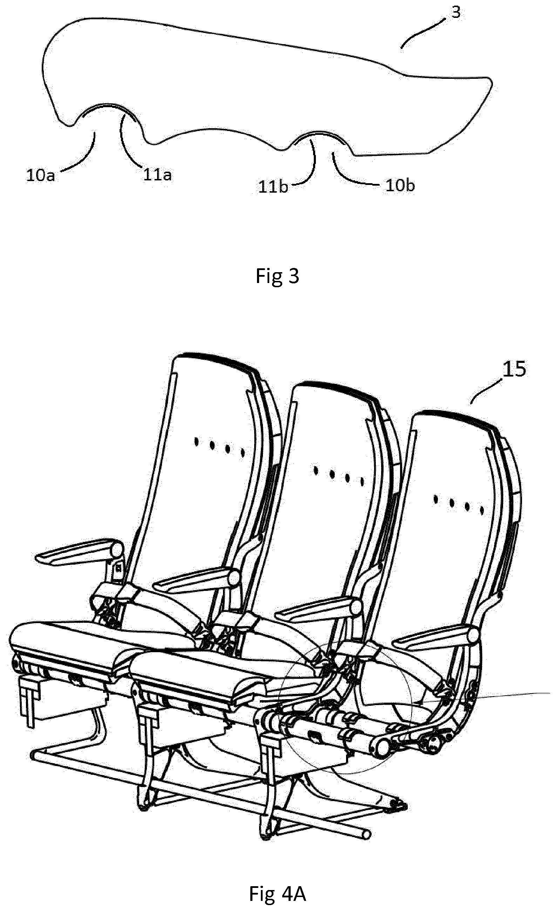

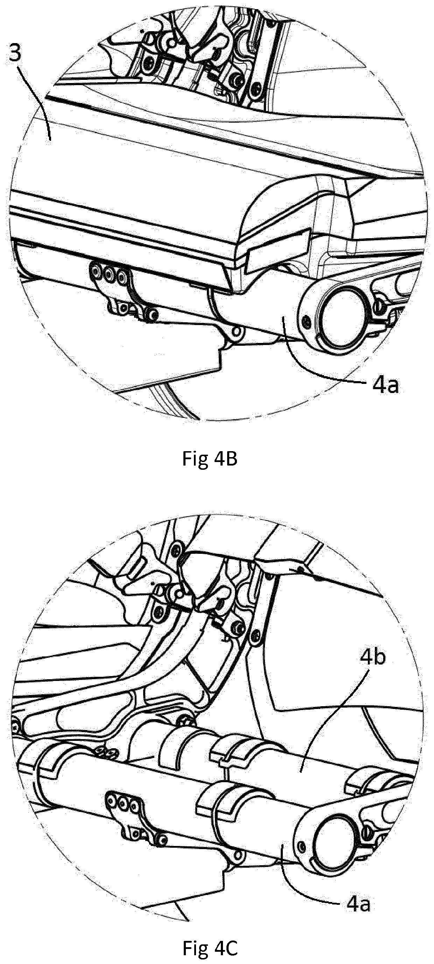

As shown in Figure 3, a seat base cushion 3 includes a pair of recesses or arcuate channels 10a, 10b each for accommodating a pair of connectors 1. Within each recess 10a, 10b, Velcro pads 11a, 11b are provided for engagement with the Velcro pads 7a, 7b on the body 2 when the seat base cushion is positioned over elongate frame members 4 and into engagement with the connectors 1. This is also shown with reference to Figures 4A to 4C from which it will be seen that, in the example shown, a pair of connectors 1 is provided on each elongate frame member 4a, 4b for engagement with Velcro pads 11a, 11b.

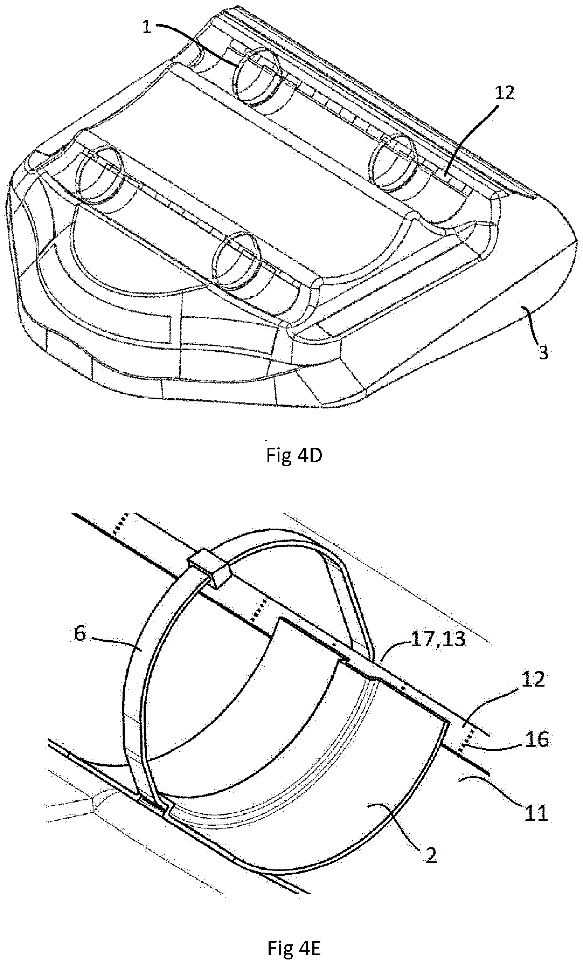

With reference to Figures 4D and 4E, the seat base cushion 3 includes a strip of material, such as leather or nylon, 12 stitched to the underside of the seat base cushion 3. The stitching 16 includes gaps 17 provided therein, which form loops 13 for receiving the cable tie 6. Accordingly, in the event that the seat base cushion 3 is to be permanently attached to the elongate seat frame member 4, the cable tie 6 of one or more of the provided connectors 1 can be inserted through one of the loops 13. This then prevents removal of the seat base cushion.

The present invention includes the following numbered embodiments.
1. A connector for attaching a seat base cushion of an aircraft seat to an elongate frame member of an aircraft seat and for maintaining a gap between the seat base cushion and the elongate frame member, wherein the connector comprises
   (i) a body positionable between the seat base cushion and the elongate frame member,
   (ii) first and second frame fasteners for attaching the body to the elongate frame member; and
   (iii) a seat base cushion attachment means for removably attaching the body to the underside of the seat base cushion,
   wherein the first frame fastener is provided on a frame facing surface of the body such that it is positionable between the body and the elongate frame member and wherein the second frame fastener is for at least partially surrounding the elongate frame member.
2. A connector according to embodiment 1, wherein the second frame fastener is provided around the body.
3. A connector according to embodiment 1 or 2, wherein the first frame fastener comprises an adhesive for permanently attaching the body to the frame.
4. A connector according to any preceding embodiment, wherein the first frame fastener comprises an adhesive pad for permanently attaching the body to the frame.
5. A connector according to any preceding embodiment, wherein the second frame fastener comprises a flexible loop.
6. A connector according to embodiment 5, wherein the flexible loop is adjustable during installation from a large loop to a smaller loop for securing the body against the frame and tightening there against.
7. A connector according to embodiment 6, wherein the flexible loop comprises a lock for preventing the loop from being relaxed once tightened against the frame and the body.
8. A connector according to any preceding embodiment, wherein the second frame fastener comprises a cable tie.
9. A connector according to any preceding embodiment, wherein the body comprises a groove for accommodating the second fastener on its outer surface.
10. A connector according to any preceding embodiment, wherein the body comprises one or more holding means for holding the second fastener into engagement with the body.
11. A connector according to embodiment 10, wherein the one or more holding means comprise one or more apertures through which the second fastener passes.
12. A connector according to embodiment 10 or 11, wherein the body comprises a groove for accommodating the second fastener on its outer surface and wherein the one or more holding means are provided at one or both ends of the groove.
13. A connector according to any preceding embodiment, wherein the seat base cushion attachment means comprises Velcro.
14. A connector according to any preceding embodiment, wherein the seat base cushion attachment means comprises a pair of Velcro strips.
15. A connector according to any preceding embodiment, wherein the body comprises a groove for accommodating the second fastener on its outer surface and wherein the seat base cushion attachment means comprises a pair of Velcro strips positioned either side of the groove.
16. A connector according to any preceding embodiment, wherein the body is shaped to abut against and at least partially surround a frame member of the aircraft seat frame.
17. A connector according to any preceding embodiment, wherein the body is substantially C-shaped.
18. A seat frame comprising one or more connectors according to any preceding embodiment.
19. A seat base cushion comprising one or more receiving elements for receiving a second frame fastener of a connector according to any of embodiments 1 to 17.
20. A seat base cushion according to embodiment 19, wherein the one or more receiving elements comprise one or more loops.
21. A seat base cushion according to embodiment 19 or 20, wherein the seat base cushion comprises one or more recesses for accommodating one or more connectors according to any of embodiments 1 to 17.
22. A seat base cushion according to embodiment 21, wherein the one or more recesses comprise one or more channels.
23. A seat comprising one or more connectors according to any of embodiments 1 to 17 and/or a seat base cushion according to any of embodiments 19 to 22.
24. A row of seats according to embodiment 23.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A connector for attaching a seat base cushion of an aircraft seat to an elongate frame member of an aircraft seat and for maintaining a gap between the seat base cushion and the elongate frame member, wherein the connector comprises
(i) a body positionable between the seat base cushion and the elongate frame member,
(ii) first and second frame fasteners for attaching the body to the elongate frame member; and
(iii) a seat base cushion attachment means for removably attaching the body to the underside of the seat base cushion,
wherein the first frame fastener is provided on a frame facing surface of the body such that it is positionable between the body and the elongate frame member and wherein the second frame fastener is for at least partially surrounding the elongate frame member.

2. A connector according to claim 1, wherein the second frame fastener is provided around the body.

3. A connector according to claim 1 or 2, wherein the first frame fastener comprises an adhesive for permanently attaching the body to the frame.

4. A connector according to any preceding claim, wherein the first frame fastener comprises an adhesive pad for permanently attaching the body to the frame.

5. A connector according to any preceding claim, wherein the second frame fastener comprises a flexible loop, optionally wherein the flexible loop is adjustable during installation from a large loop to a smaller loop for securing the body against the frame and tightening there against.

6. A connector according to claim 5, wherein the flexible loop comprises a lock for preventing the loop from being relaxed once tightened against the frame and the body and/or wherein the second frame fastener comprises a cable tie.

7. A connector according to any preceding claim, wherein the body comprises a groove for accommodating the second fastener on its outer surface.

8. A connector according to any preceding claim, wherein the body comprises one or more holding means for holding the second fastener into engagement with the body, optionally wherein the one or more holding means comprise one or more apertures through which the second fastener passes.

9. A connector according to claim 8, wherein the body comprises a groove for accommodating the second fastener on its outer surface and wherein the one or more holding means are provided at one or both ends of the groove.

10. A connector according to any preceding claim, wherein the body comprises a groove for accommodating the second fastener on its outer surface and wherein the seat base cushion attachment means comprises a pair of Velcro strips positioned either side of the groove.

11. A seat frame comprising one or more connectors according to any preceding claim.

12. A seat base cushion comprising one or more receiving elements for receiving a second frame fastener of a connector according to any of claims 1 to 10.

13. A seat base cushion according to claim 12, wherein the one or more receiving elements comprise one or more loops.

14. A seat comprising one or more connectors according to any of claims 1 to 10 and/or a seat base cushion according to claim 12 or 13.

15. A row of seats according to claim 14.
